# EUROPEAN PATENT SPECIFICATION

(11) **EP 4 053 964 B1**
(45) Date of publication and mention of the grant of the patent: **25.06.2025**
(21) Application number: 21880407.8
(22) Date of filing: 07.10.2021
(51) Int. Cl.: H01M 10/42, H01M 50/20, H01M 50/502, H01M 50/209

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 12.10.2020 KR 20200131093
(43) Date of publication of application: 07.09.2022
(73) Proprietor: LG Energy Solution, Ltd., Seoul 07335 (KR)
(72) Inventor: SHIN, Jongmok, Daejeon 34122 (KR); CHOI, Jinhyeong, Daejeon 34122 (KR); EOM, Ji Hye, Daejeon 34122 (KR)
(74) Representative: Plasseraud IP
(86) International application number: PCT/KR2021/013818
(87) International publication number: WO 2022/080760

(56) References cited:
- KR-A- 20120 134 004
- KR-A- 20140 121 186
- KR-A- 20180 010 869
- KR-A- 20180 112 617
- KR-A- 20190 034 868
- US-A1- 2017 331 159
- US-A1- 2019 252 734

## Description

### [TECHNICAL FIELD]

The present disclosure relates to a battery pack and a device including the same, and more particularly to a battery pack capable of securing the wireless transmission performance and a device including the same.

### [BACKGROUND]

Generally, a secondary battery capable of being charged and discharged is widely used as a battery that is a power source for wireless mobile devices. Such batteries are also in the spotlight as a power source for electric vehicles (EVs), hybrid electric vehicles (HEVs), and the like, which have been proposed as a method for solving the air pollution problem of conventional gasoline or diesel vehicles using fossil fuels. When these batteries are alternately charged and discharged, there is a need to efficiently control the charge and discharge of the battery so that the battery maintains proper operating conditions and performance.

For this purpose, a battery management system (BMS) that manages the condition and performance of the battery is provided in the battery pack. BMS manages a battery by measuring the current, voltage, temperature, etc. of the battery and recording them in memory.

On the other hand, as the need for a high-capacity secondary battery structure has increased recently, including the utilization of secondary batteries as an energy storage source, there is an increasing demand for a battery pack having a multi-module structure which is an assembly of battery modules in which a plurality of secondary batteries are connected in series/parallel.

Such a battery pack having a multi-module structure may be implemented in various types of pack structures depending on the configuration of circuits, PCBs, and the like. A multi-BMS structure composed of a plurality of slave BMSs that can easily control the condition of the secondary battery and a master BMS that integrally controls the plurality of slave BMSs is mainly used.

Conventionally, the communication between the master BMS and the slave BMS used the wired BMS method, but a wireless BMS method (WBMS, Wireless Battery Management System) has recently been in the spotlight for improvement such as cost reduction, securing of design freedom, and weight reduction. Through the wireless BMS method, the wire harness traditionally used for wired connections is unnecessary, which can bring about cost reduction and weight reduction. The weight reduction can also bring about the effect of improving the fuel efficiency of electric vehicles provided with battery packs. In addition, it is possible to remove the connector traditionally used for the wired connection, thereby reducing cost and defective rate.

One of the most important parts of the wireless BMS method is the performance of the antenna, and the performance of the antenna may vary depending on the operating environment of the antenna. Particularly, in the case of a battery pack mounted on an electric vehicle, the size is large and the periphery is made of a metal material. Thus, a multi-path phenomenon due to reflection may occur and communication may deteriorate. Therefore, in the wireless BMS system, it may be essential to design a battery pack structure capable of minimizing the deterioration of wireless communication performance.

US2019252734A1 discloses multipoint communication systems for battery management systems, and associated systems and methods. US2017331159A1 discloses communication between battery cells.

### [DETAILED DESCRIPTION OF THE INVENTION]

### [Technical Problem]

It is an object of the present disclosure to provide a battery pack capable of securing the wireless transmission performance and a device including the same.

The objects of the present disclosure are not limited to the aforementioned objects, and other objects which are not described herein should be clearly understood by those skilled in the art from the following detailed description.

### [Technical Solution]

In order to achieve the above object, according to one embodiment of the present disclosure, there is provided a battery pack comprising: a plurality of first battery modules and a plurality of second battery modules that are arranged in two rows in a first direction; a battery case that houses the plurality of first and second battery modules and includes a plurality of cross beams for partitioning between the plurality of first battery modules and between the plurality of second battery modules; a plurality of first slave BMSs that are positioned at one side of the plurality of first battery modules facing the plurality of second battery modules and are arranged in the first direction; a plurality of second slave BMSs that are positioned at one side of the plurality of second battery modules facing the plurality of first battery modules and are arranged in the first direction; a plurality of first reflected wave absorbers arranged on one side of the plurality of first battery modules facing the plurality of second battery modules; and a plurality of second reflected wave absorbers arranged on one side of the plurality of second battery modules facing the plurality of first battery modules.

The battery pack may further comprise a first wave path guide that is formed to extend along a first direction at an upside part of the plurality of first battery modules; and a second wave path guide that is formed to extend along a first direction at an upside part of the plurality of second battery modules.

The plurality of first slave BMSs and the plurality of second battery modules may be respectively arranged in the first direction between the first wave path guide and the second wave path guide.

The plurality of first reflected wave absorbers may be arranged apart from the first wave path guide and the first slave BMS under the first wave path guide and the first slave BMS, and the plurality of second reflected wave absorbers may be arranged apart from the second wave path guide and the second slave BMS under the second wave path guide and the second slave BMS.

The battery pack may further comprise a master BMS formed separately from the plurality of first and second battery modules between the first wave path guide and the second wave path guide.

The first and second wave path guides may be formed extendedly in the first direction so as to pass through the plurality of first and second battery modules, and the master BMS may be arranged at a position separated from the plurality of first and second battery modules in the first direction.

The plurality of first reflected wave absorbers may be arranged so as to correspond to the plurality of first slave BMSs under the plurality of first slave BMSs, and the plurality of second reflected wave absorbers may be arranged so as to correspond to the plurality of second slave BMSs under the plurality of second slave BMSs.

The first wave path guide may be formed between the battery pack upper cover and the plurality of first battery modules, and the second wave path guide may be formed between the battery pack upper cover and the plurality of second battery modules.

An antenna may be formed in the first and second slave BMSs.

The battery pack may further comprise a battery pack upper cover that covers the upper surface of the battery case, wherein at least one hole may be formed in the battery pack upper cover.

The battery pack may comprise a plurality of first bus bars that are arranged so as to span between two adjacent battery modules among the battery modules of the plurality of first battery modules; and a plurality of second bus bars arranged so as to span between two adjacent battery modules among the battery modules of the plurality of second battery modules.

According to one embodiment of the present disclosure, there is provided a device comprising the above-mentioned battery pack.

### [Advantageous Effects]

A battery pack and a device including the same according to one embodiment of the present disclosure can provide a battery pack structure provided with a WBMS having a novel structure, thereby securing the wireless communication performance of the battery.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery pack according to an embodiment of the present disclosure;
Fig. 2 is a top view of the battery pack of Fig. 1 as viewed from above;
Fig. 3 shows a section A of Fig. 1, which is a view showing a state in which a hole is formed in the battery pack upper cover according to an embodiment of the present disclosure;
Fig. 4 shows a section B-B of Fig. 2, which is a cross-sectional view showing a central portion of a battery pack provided with a reflected wave absorber according to an embodiment of the present disclosure;
Fig. 5 shows a section D of Fig. 2, which is a view showing an interval between slave BMSs according to an embodiment of the present disclosure;
Fig. 6 shows a section C of Fig. 4, which is a view showing the height of the outside wall of the battery case according to an embodiment of the present disclosure; and
Fig. 7 shows a section C of Fig. 4, which is a view showing a height of a cross beam of a battery case according to an embodiment of the present disclosure.

### [DETAILED DESCRIPTION OF THE EMBODIMENTS]

It should be appreciated that the exemplary embodiments, which will be described below, are illustratively described to assist in the understand the present disclosure, and the present disclosure can be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

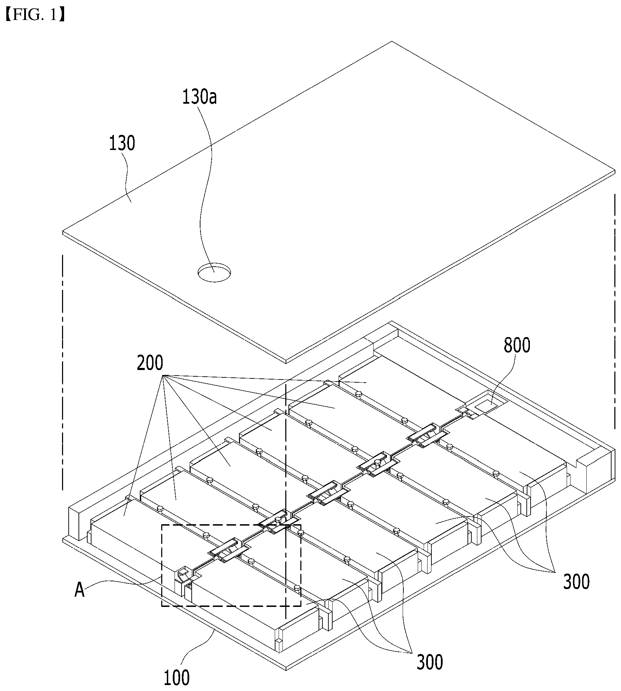

Below, the battery pack provided with BMS according to one embodiment of the present disclosure will be described with reference to Figs. 1 to 4.

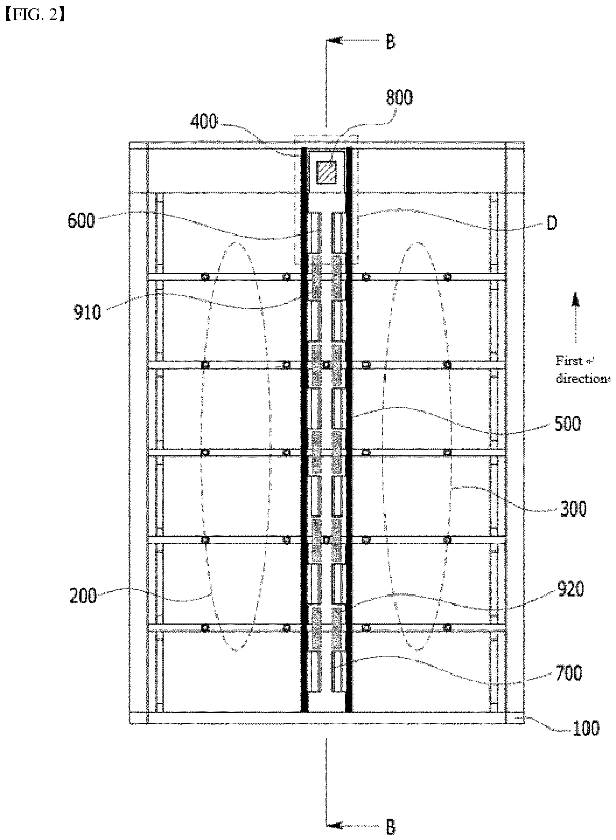

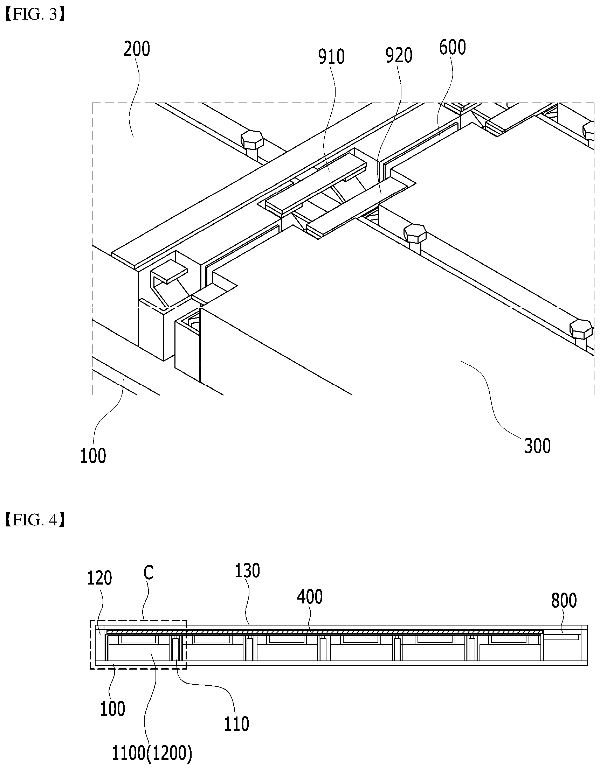

Fig. 1 is a perspective view showing a battery pack according to an embodiment of the present disclosure. Fig. 2 is a top view of the battery pack of Fig. 1 as viewed from above. Fig. 3 shows a section A of Fig. 1, which is a view showing a state in which a hole is formed in the battery pack upper cover according to an embodiment of the present disclosure. Fig. 4 shows a section B-B of Fig. 2, which is a cross-sectional view showing a central portion of a battery pack provided with a reflected wave absorber according to an embodiment of the present disclosure.

Referring to Figs. 1 to 4, the battery pack according to one embodiment of the present disclosure includes a plurality of first battery modules 200 and a plurality of second battery modules 300 that are arranged in two rows in a first direction, and a battery case 100 that houses the plurality of first and second battery modules 200 and 300 and includes a plurality of cross beams 110 for partitioning between the plurality of first battery modules 200 and between the plurality of second battery modules 300. The plurality of first battery modules 200 and the plurality of second battery modules 300 may be arranged so as to face each other.

Further, the battery pack includes a first wave path guide 400 that is formed to extend along a first direction at an upside part of the plurality of first battery modules 200; and a second wave path guide 500 that is formed to extend along a first direction at an upside part of the plurality of second battery modules 300.

Further, the battery pack includes a plurality of first slave BMSs 600 that are positioned at one side of the plurality of first battery modules 200 facing the plurality of second battery modules 300 and are arranged in the first direction between the first wave path guide 400 and the second wave path guide 500, and a plurality of second slave BMSs 700 that are positioned on one side of the plurality of second battery modules 300 facing the plurality of first battery modules 200 and are arranged in the first direction between the first wave path guide 400 and the second wave path guide 500.

Referring to Fig. 1, the battery case 100 houses a plurality of first and second battery modules 200 and 300. The plurality of module regions of the battery case 100 may be formed to have sizes corresponding to the sizes of the first and second battery modules 200 and 300, respectively. The plurality of first and second battery modules 200 and 300 may be seated on the plurality of module regions, respectively.

According to the present embodiment, the plurality of first battery modules 200 are arranged along a first direction, and the plurality of second battery modules 300 are arranged along a first direction at the side face of the plurality of first battery modules 200, thereby forming a two-row battery module arrangement structure. At this time, each battery module constituting the plurality of first battery modules 200 may be arranged apart from each other so as to face each battery module constituting the plurality of second battery modules 300.

Referring to Figs. 2 and 4, a cross beam 110 may be formed between module regions to partition between battery modules arranged in each module region. The cross beam 110 can protect the plurality of first and second battery modules 200 and 300 from the physical force acting from the outside together with the outside wall 120 forming the outer periphery of the battery case 100.

The thermal conductive resin layer can be formed on the bottom face of the battery case 100. The thermal conductive resin layer can transfer the heat generated from the plurality of first and second battery modules 200 and 300 arranged in each of the plurality of module regions to the outside of the battery pack.

According to the present embodiment, the first slave BMS 600 may be arranged in each of the plurality of first battery modules 200. More specifically, the first slave BMS 600 may be arranged in portions facing the plurality of second battery modules 300. The first slave BMS 600 may be arranged in the central portion of the battery case 100. That is, the first slave BMS 600 is arranged in one side parts of the plurality of first battery modules 200 along the first direction among the plurality of first and second battery modules 200 and 300, and thus can be arranged across the central portion of the battery case 100.

The second slave BMS 700 may be arranged in each of the plurality of second battery modules 300. More specifically, the second slave BMS 700 may be arranged in portions facing the plurality of first battery modules 200. The second slave BMS 700 may be arranged in the central portion of the battery case 100. That is, the second slave BMS 700 is arranged in one side parts of the plurality of second battery modules 300 along the first direction between the plurality of first and second battery modules 200 and 300, and thus can be arranged across the central portion of the battery case 100.

Looking at the wireless transmission characteristics according to the arrangement position of the master BMS and the slave BMS, it may be more advantageous in terms of wireless transmission performance that the slave BMS is located in the central portion of the battery case as in the present embodiment, that is, in the space between the battery modules as shown in Fig. 1, rather than the slave BMS being located on the outer hull part of the battery case.

The battery pack according to the present embodiment includes a first wave path guide 400 formed to extend along the first direction at the upside part of the plurality of first battery modules 200, and a second wave path guide 500 formed to extend along the first direction at the upside part of the plurality of second battery modules 300. At this time, the first slave BMS 600 and the second slave BMS 700 according to the present embodiment may be disposed in a space formed between the first and second wave path guides 400 and 500. In addition, the first wave path guide 400 is formed between the battery pack upper cover 130 and the plurality of first battery modules 200, and the second wave path guide 500 may be formed between the battery pack upper cover 130 and the plurality of second battery modules 300.

The battery pack according to the present embodiment is mainly mounted inside the electric vehicle, and the periphery of the battery pack to be mounted is made of a metal material. Thus, the communication performance may deteriorate due to the multi-path phenomenon of radio waves reflected by the metal material. Thus, according to the present embodiment, the first and second wave path guides 400 and 500 can be formed so as to cover the space between the plurality of first and second battery modules 200 and 300 provided with the plurality of first and second slave BMSs 600 and 700. Therefore, it is possible to concentrate the wireless transmission signal distribution in the space between the plurality of first and second battery modules 200 and 300 formed between the first and second wave path guides 400 and 500, thereby improving the wireless transmission performance. Further, the deterioration that may occur in communication between the master BMS 800 and the first and second slave BMSs 600 and 700 can be minimized.

According to the experimental example, it can be confirmed that in the battery pack in which the central arrangement structure of the first and second slave BMS 600 and 700 and the arrangement structure of the first and second wave path guides 400 and 500 according to the present embodiment are formed, the wireless transmission coefficient S21 among the S-parameters is improved by about 18dB from -53.78dB to -35.21dB to construct a stable communication connection structure, as compared with the conventional battery pack structure in which slave BMSs are arranged outside and no wave path guide is installed,

According to the present embodiment, the battery pack may further include a master BMS 800 formed separately from the plurality of first and second battery modules between the first wave path guide 400 and the second wave path guide 500. The master BMS 800 may communicate with a host system. The master BMS 800 can mainly manage communication with the plurality of first and second slave BMSs 600 and 700.

The first and second wave path guides 400 are formed by passing through the plurality of first and second battery modules 200 and 300 and extending in the first direction up to a position where the master BMS 800 is arranged, and the master BMS 800 is arranged at a position separated from the plurality of first and second battery modules 200 and 300 in the first direction. At this time, the master BMS 800 may be arranged symmetrically with the plurality of first and second battery modules 200 and 300.

Therefore, the master BMS 800 is arranged at a position symmetrically separated from the plurality of first and second slave BMSs 600 and 700, so that communication with the slave BMSs can be performed in a balanced manner. Further, the master BMS 800 is arranged in the space between the first and second wave path guides 400 and 500 together with the first and second slave BMSs 600 and 700, so that communication deterioration between the master BMS 800 and the first and second slave BMS 600 and 700 can be minimized, and wireless communication performance can be secured.

According to the present embodiment, antennas can be formed in the first and second slave BMSs 600 and 700. The antenna may include a chip antenna. According to the experimental example, when a chip antenna is used for the first and second slave BMS 600 and 700 according to the present embodiment, it is possible to secure excellent wireless performance by 10dB or more as compared with the case of using a pattern antenna.

Referring to Fig. 1, the battery pack according to the present embodiment further includes a battery pack upper cover 130 that covers the upper surface of the battery case 100. At this time, at least one hole 130a may be formed in the battery pack upper cover 130.

The heat dissipation function of the battery pack can be performed through the hole 130a formed in the battery pack upper cover 130. However, noise may occur during communication between the BMSs due to the hole 130a that connects the outside and the inside of the battery pack. When the size of the hole 130a increases, noise may also increase. Therefore, the number and size of the holes 130a that can appropriately satisfy both the heat dissipation performance and the noise performance at the same time can be applied. According to the experimental example, as a result of investigating the wireless transmission characteristics and noise control performance, in the case of a worst case, such as a hole located directly above the antenna of the master BMS or slave BMS, or a mobile phone hotspot located near the hole, wireless transmission performance can be secured when designing a hole diameter of 45 mm or less. Noise control performance can be secured when it is designed to be less than 20mm. However, even if there are a plurality of holes, the same noise control performance can be obtained. Thus, in consideration of heat dissipation and noise performance, a structure in which a plurality of holes having a small diameter are arranged may be advantageous. Although only one hole 130a is shown in Fig. 1, a plurality of holes may be arranged in the battery pack upper cover 130 according to the experimental example.

Referring to Fig. 4, the battery pack according to one embodiment of the present disclosure includes a plurality of first reflected wave absorbers 1100 arranged on one side of the plurality of first battery modules 200 facing the plurality of second battery modules 300, and a plurality of second reflected wave absorbers 1200 arranged on one side of the plurality of second battery modules 300 facing the plurality of first battery modules 200.

When an artificial propagation passage space is generated by using the first and second wave path guides 400 and 500 as in the present embodiment, the transmission signal is concentrated in the space between the first and second wave path guides 400 and 500, whereby the reflected interference waves from the components provided between the first and second wave path guides 400 and 500 are generated and thus, the wireless communication performance may decrease.

Thus, according to the present embodiment, as shown in Fig. 4, a plurality of first reflected wave absorbers 1100 can be arranged for each battery module on one side of the plurality of first battery modules 200 and thus, it is possible to absorb the reflected interference waves that may be generated from components provided between the first and second wave path guides 400 and 500, and to create an environment in which the wireless communication is not disturbed by the reflected interference waves.

Only the configuration of the plurality of first reflected wave absorbers 1100 provided on one side of the plurality of first battery modules 200 is disclosed in Fig. 4, but the plurality of second battery modules 300 are also symmetrically arranged with the arrangement structure of the plurality of first battery modules 200 of Fig. 4. Therefore, a plurality of second reflected wave absorbers 1200 are also provided on one side of the plurality of second battery modules 300, and the plurality of first reflected wave absorbers 1100 and the plurality of second reflected wave absorbers 1200 may be arranged symmetrically with each other.

According to the present embodiment, the plurality of first reflected wave absorbers 1100 may be arranged apart from the first wave path guide 400 and the first slave BMS 600 under the first wave path guide 400 and the first slave BMS 600. The plurality of second reflected wave absorbers 1300 may be arranged apart from the second wave path guide 500 and the second slave BMS 700 under the second wave path guide 500 and the second slave BMS 700.

At this time, the plurality of first reflected wave absorbers 1100 may be arranged so as to correspond to the plurality of first slave BMSs 600 under the plurality of first slave BMSs 600. Further, the plurality of second reflected wave absorbers 1200 may be arranged so as to correspond to the plurality of second slave BMSs 700 under the plurality of second slave BMSs 700.

In this manner, the first and second reflected wave absorbers 1100 and 1200 are arranged at positions spaced apart from the first and second slave BMSs 600 and 700, and thus, can be installed at positions that do not interfere with the wireless communication functions of the first and second slave BMSs 600 and 700. The first and second reflected wave absorbers 1100 and 1200 are provided inside the battery pack together with the first and second wave path guides 400 and 500, whereby in a state in which the transmission path has directionality through the first and second wave path guides 400 and 500, the reflected interference propagation can be removed through the first and second reflected wave absorbers 1100 and 1200, and thus, the wireless transmission performance of the battery pack according to the present embodiment can be maximized.

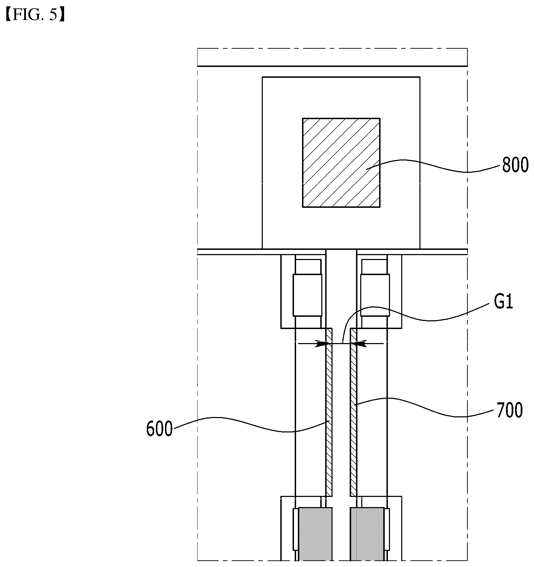

Fig. 5 shows a section D of Fig. 2, which is a view showing an interval between slave BMSs according to an embodiment of the present disclosure.

According to the present embodiment, the plurality of first slave BMS 600 and the plurality of second slave BMS 700 may be formed apart from each other so as to have a gap G1 as shown in Fig. 5. More specifically, the plurality of first slave BMS 600 arranged in the plurality of first battery modules 200 and the plurality of second slave BMS 700 arranged in the plurality of second battery modules 300 may formed to be separated from each other.

According to the present embodiment, the separation distance between the first slave BMS 600 and the second slave BMS 700 may be formed to be 50 mm. Conventionally, the distance between the two battery modules arranged in two rows was arranged as narrow as 30 mm, but the distance between the two battery modules is increased to 50 mm as in the present embodiment, so that the wireless transmission space is increased, and thus the wireless transmission performance can be improved.

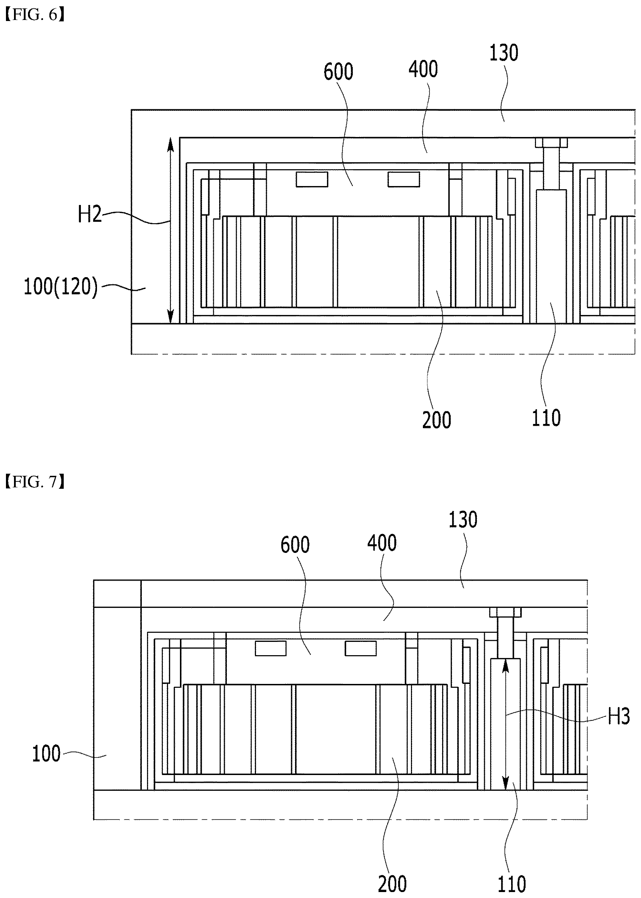

Fig. 6 shows a section C of Fig. 4, which is a view showing the height of the outside wall of the battery case according to an embodiment of the present disclosure.

Referring to Fig. 6, the battery pack according to one embodiment of the present disclosure may be configured such that the upper end of the outside wall 120 of the battery case 100 and the battery pack upper cover 130 are coupled, and the battery pack upper cover 130 may be formed apart from the plurality of first and second battery modules 200 and 300.

According to the present embodiment, the height H2 of the outside wall 120 may be formed to be 138 mm. Conventionally, the height of the outside wall is formed to be 128 mm, but according to the present embodiment, the wireless transmission performance can be improved by making the height H2 of the outside wall 120 higher than the height of the conventional outside wall. In other words, as the height H2 of the outside wall 120 increases, the wireless transmission performance can be more improved.

Fig. 6 shows only the portion in which the plurality of first slave BMS 600 and the first wave path guide 400 are formed, but a portion in which the plurality of second slave BMS 700 and the second wave path guide 500 formed at mutually opposite sides are also arranged symmetrically as in the configuration of Fig. 6.

Fig. 7 shows a section C of Fig. 4, which is a view showing a height of a cross beam of a battery case according to an embodiment of the present disclosure.

Referring to Figs. 3 and 7, the battery pack according to one embodiment of the present disclosure may include a plurality of first bus bars 910 arranged so as to span between two adjacent battery modules among each battery module of the plurality of first battery modules 200, and a plurality of second bus bars 920 arranged so as to span between two adjacent battery modules among each battery module of the plurality of second battery modules 300. At this time, the cross beam 110 may be formed apart from the plurality of first and second bus bars 910 and 920 under the plurality of first and second bus bars 910 and 920, respectively.

According to the present embodiment, the height of the cross beam 110 may be formed to be 70 mm. The height of the conventional cross beam 110 was formed to be about 90 mm, but according to the present embodiment, the height H3 of the cross beam 110 can be made lower than that of the conventional cross beam 110, thereby improving the wireless transmission performance. In other words, as the height H3 of the cross beam 110 decreases, the wireless transmission performance can be more improved.

Fig. 7 shows only a portion in which the plurality of first slave BMS 600 and the first wave path guide 400 are formed, but a portion in which the plurality of second slave BMSs 700 and the second wave path guide 500 formed at mutually opposite sides are also symmetrically arranged as in the configuration of Fig. 6.

The above-mentioned battery pack can be applied to various devices. Such a device can be applied to a vehicle means such as an electric bicycle, an electric vehicle, or a hybrid vehicle, but the present disclosure is not limited thereto, and is applicable to various devices capable of using a battery module, which also falls under the scope of the present disclosure.

Although the invention has been shown and described above with reference to the preferred embodiments, the scope of the present disclosure is not limited thereto, and numerous other modifications and embodiments can be devised by those skilled in the art.

### [Description of Reference Numerals]

100: battery case
110: cross beam
120: outside wall
130: battery pack upper cover
130a: hole
200: first battery module
300: second battery module
400: first wave path guide
500: second wave path guide
600: first slave BMS
700: second slave BMS
800: master BMS
910: first bus bar
920: second bus bar
1100: first reflected wave absorber
1200: second reflected wave absorber

## Claims

1. A battery pack comprising:
a plurality of first battery modules (200) and a plurality of second battery modules (300) that are arranged in two rows in a first direction;
a battery case (100) that houses the plurality of first and second battery modules and includes a plurality of cross beams (110) for partitioning between the plurality of first battery modules and between the plurality of second battery modules;
a plurality of first slave BMSs (600) that are positioned at one side of the plurality of first battery modules facing the plurality of second battery modules and are arranged in the first direction;
a plurality of second slave BMSs (700) that are positioned at one side of the plurality of second battery modules facing the plurality of first battery modules and are arranged in the first direction;
a plurality of first reflected wave absorbers (1100) arranged on one side of the plurality of first battery modules facing the plurality of second battery modules; and
a plurality of second reflected wave absorbers (1200) arranged on one side of the plurality of second battery modules facing the plurality of first battery modules.

2. The battery pack of claim 1,
which further comprises a first wave path guide (400) that is formed to extend along a first direction at an upside part of the plurality of first battery modules; and
a second wave path guide (500) that is formed to extend along a first direction at an upside part of the plurality of second battery modules.

3. The battery pack of claim 2, wherein:
the plurality of first slave BMSs and the plurality of second battery modules are respectively arranged in the first direction between the first wave path guide and the second wave path guide.

4. The battery pack of claim 3, wherein:
the plurality of first reflected wave absorbers are arranged apart from the first wave path guide and the first slave BMS under the first wave path guide and the first slave BMS, and
the plurality of second reflected wave absorbers are arranged apart from the second wave path guide and the second slave BMS under the second wave path guide and the second slave BMS.

5. The battery pack of claim 2, wherein:
which further comprises a master BMS (800) formed separately from the plurality of first and second battery modules between the first wave path guide and the second wave path guide.

6. The battery pack of claim 5, wherein:
the first and second wave path guides are formed extendedly in the first direction so as to pass through the plurality of first and second battery modules, and
the master BMS is arranged at a position separated from the plurality of first and second battery modules in the first direction.

7. The battery pack of claim 5, wherein:
the plurality of first reflected wave absorbers are arranged so as to correspond to the plurality of first slave BMSs under the plurality of first slave BMSs, and
the plurality of second reflected wave absorbers are arranged so as to correspond to the plurality of second slave BMSs under the plurality of second slave BMSs.

8. The battery pack of claim 2, wherein:
the first wave path guide is formed between the battery pack upper cover (130) and the plurality of first battery modules, and
the second wave path guide is formed between the battery pack upper cover and the plurality of second battery modules.

9. The battery pack of claim 1, wherein:
an antenna is formed in the first and second slave BMSs.

10. The battery pack of claim 1, wherein:
which further comprises a battery pack upper cover that covers the upper surface of the battery case,
wherein at least one hole (130a) is formed in the battery pack upper cover.

11. The battery pack of claim 1, wherein:
which comprises a plurality of first bus bars (910) that are arranged so as to span between two adjacent battery modules among the battery modules of the plurality of first battery modules; and
a plurality of second bus bars (920) arranged so as to span between two adjacent battery modules among the battery modules of the plurality of second battery modules.

12. A device comprising the battery pack of claim 1.

## Patentansprüche

1. Batteriepack, umfassend:
eine Mehrzahl von ersten Batteriemodulen (200) und eine Mehrzahl von zweiten Batteriemodulen (300), welche in zwei Reihen in einer ersten Richtung angeordnet sind;
ein Batteriegehäuse (100), welches die Mehrzahl von ersten und zweiten Batteriemodulen aufnimmt und eine Mehrzahl von Querstreben (110) zum Unterteilen zwischen der Mehrzahl von ersten Batteriemodulen und zwischen der Mehrzahl von zweiten Batteriemodulen umfasst;
eine Mehrzahl von ersten Slave-BMSs (600), welche an einer Seite der Mehrzahl von ersten Batteriemodulen positioniert sind, welche zu der Mehrzahl von zweiten Batteriemodulen weisen und in der ersten Richtung angeordnet sind;
eine Mehrzahl von zweiten Slave-BMSs (700), welche an einer Seite der Mehrzahl von zweiten Batteriemodulen positioniert sind, welche zu der Mehrzahl von ersten Batteriemodulen weisen und in der ersten Richtung angeordnet sind;
eine Mehrzahl von ersten Absorbern (1100) für reflektierte Wellen, welche an einer Seite der Mehrzahl von ersten Batteriemodulen angeordnet sind, welche zu der Mehrzahl von zweiten Batteriemodulen weisen; und
eine Mehrzahl von zweiten Absorbern (1200) für reflektierte Wellen, welche an einer Seite der Mehrzahl von zweiten Batteriemodulen angeordnet sind, welche zu der Mehrzahl von ersten Batteriemodulen weisen.

2. Batteriepack nach Anspruch 1,
welcher ferner einen ersten Wellenpfad-Leiter (400) umfasst, welcher dazu gebildet ist, sich entlang einer ersten Richtung an einem oberen Teil der Mehrzahl von ersten Batteriemodulen zu erstrecken; und
einen zweiten Wellenpfad-Leiter (500), welcher dazu gebildet ist, sich entlang einer ersten Richtung an einem oberen Teil der Mehrzahl von zweiten Batteriemodulen zu erstrecken.

3. Batteriepack nach Anspruch 2, wobei:
die Mehrzahl von ersten Slave-BMSs und die Mehrzahl von zweiten Batteriemodulen jeweils in der ersten Richtung zwischen dem ersten Wellenpfad-Leiter und dem zweiten Wellenpfad-Leiter angeordnet sind.

4. Batteriepack nach Anspruch 3, wobei:
die Mehrzahl von ersten Absorbern für reflektierte Wellen getrennt von dem ersten Wellenpfad-Leiter und dem ersten Slave-BMS unter dem ersten Wellenpfad-Leiter und dem ersten Slave-BMS angeordnet sind, und
die Mehrzahl von zweiten Absorbern für reflektierte Wellen getrennt von dem zweiten Wellenpfad-Leiter und dem zweiten Slave-BMS unter dem zweiten Wellenpfad-Leiter und dem zweiten Slave-BMS angeordnet sind.

5. Batteriepack nach Anspruch 2, wobei:
welcher ferner ein Master-BMS (800) umfasst, welches separat von der Mehrzahl von ersten und zweiten Batteriemodulen zwischen dem ersten Wellenpfad-Leiter und dem zweiten Wellenpfad-Leiter gebildet ist.

6. Batteriepack nach Anspruch 5, wobei:
die ersten und zweiten Wellenpfad-Leiter sich in der ersten Richtung erstreckend gebildet sind, um so durch die Mehrzahl von ersten und zweiten Batteriemodulen zu verlaufen, und
das Master-BMS an einer Position separat von der Mehrzahl von ersten und zweiten Batteriemodulen in der ersten Richtung angeordnet ist.

7. Batteriepack nach Anspruch 5, wobei:
die Mehrzahl von ersten Absorbern für reflektierte Wellen derart angeordnet sind, dass sie der Mehrzahl von ersten Slave-BMSs unter der Mehrzahl von ersten Slave-BMSs entsprechen, und
die Mehrzahl von zweiten Absorbern für reflektierte Wellen derart angeordnet sind, dass sie der Mehrzahl von zweiten Slave-BMSs unter der Mehrzahl von zweiten Slave-BMSs entsprechen.

8. Batteriepack nach Anspruch 2, wobei:
der erste Wellenpfad-Leiter zwischen der oberen Batteriepack-Abdeckung (130) und der Mehrzahl von ersten Batteriemodulen gebildet ist, und
der zweite Wellenpfad-Leiter zwischen der oberen Batteriepack-Abdeckung und der Mehrzahl von zweiten Batteriemodulen gebildet ist.

9. Batteriepack nach Anspruch 1, wobei:
eine Antenne in den ersten und zweiten Slave-BMSs gebildet ist.

10. Batteriepack nach Anspruch 1, wobei:
welcher ferner eine obere Batteriepack-Abdeckung umfasst, welche die obere Fläche des Batteriegehäuses bedeckt,
wobei wenigstens ein Loch (130a) in der oberen Batteriepack-Abdeckung gebildet ist.

11. Batteriepack nach Anspruch 1, wobei:
welcher eine Mehrzahl von ersten Sammelschienen (910) umfasst, welche derart angeordnet sind, dass sie sich zwischen zwei benachbarten Batteriemodulen unter den Batteriemodulen der Mehrzahl von ersten Batteriemodulen spannen; und
eine Mehrzahl von zweiten Sammelschienen (920), welche derart angeordnet sind, dass sie sich zwischen zwei benachbarten Batteriemodulen unter den Batteriemodulen der Mehrzahl von zweiten Batteriemodulen spannen.

12. Vorrichtung, umfassend den Batteriepack nach Anspruch 1.

## Revendications

1. Bloc-batterie comprenant :
une pluralité de premiers modules de batterie (200) et une pluralité de seconds modules de batterie (300) qui sont agencés en deux rangées dans une première direction ;
un boîtier de batterie (100) qui loge la pluralité de premiers et de seconds modules de batterie et inclut une pluralité de traverses (110) de cloisonnement entre la pluralité de premiers modules de batterie et entre la pluralité de seconds modules de batterie ;
une pluralité de premiers BMS esclaves (600) qui sont positionnés d'un côté de la pluralité de premiers modules de batterie faisant face à la pluralité de seconds modules de batterie et sont agencés dans la première direction ;
une pluralité de seconds BMS esclaves (700) qui sont positionnés d'un côté de la pluralité de seconds modules de batterie faisant face à la pluralité de premiers modules de batterie et sont agencés dans la première direction ;
une pluralité de premiers absorbeurs d'ondes réfléchies (1100) agencés sur un côté de la pluralité de premiers modules de batterie faisant face à la pluralité de seconds modules de batterie ; et
une pluralité de seconds absorbeurs d'ondes réfléchies (1200) agencés sur un côté de la pluralité de seconds modules de batterie faisant face à la pluralité de premiers modules de batterie.

2. Bloc-batterie selon la revendication 1,
qui comprend en outre un premier guide de chemin d'ondes (400) qui est formé pour s'étendre suivant une première direction au niveau d'une partie de dessus de la pluralité de premiers modules de batterie ; et
un second guide de chemin d'ondes (500) qui est formé pour s'étendre suivant une première direction au niveau d'une partie de dessus de la pluralité de seconds modules de batterie.

3. Bloc-batterie selon la revendication 2, dans lequel :
la pluralité de premiers BMS esclaves et la pluralité de seconds modules de batterie sont respectivement agencés dans la première direction entre le premier guide de chemin d'ondes et le second guide de chemin d'ondes.

4. Bloc-batterie selon la revendication 3, dans lequel :
la pluralité de premiers absorbeurs d'ondes réfléchies sont agencés à l'écart du premier guide de chemin d'ondes et du premier BMS esclave sous le premier guide de chemin d'ondes et le premier BMS esclave, et
la pluralité de seconds absorbeurs d'ondes réfléchies sont agencés à l'écart du second guide de chemin d'ondes et du second BMS esclave sous le second guide de chemin d'ondes et le second BMS esclave.

5. Bloc-batterie selon la revendication 2, dans lequel :
qui comprend en outre un BMS maître (800) formé séparément de la pluralité de premiers et de seconds modules de batterie entre le premier guide de chemin d'ondes et le second guide de chemin d'ondes.

6. Bloc-batterie selon la revendication 5, dans lequel :
les premier et second guides de chemin d'ondes sont formés en s'étendant dans la première direction de manière à traverser la pluralité de premiers et de seconds modules de batterie, et
le BMS maître est agencé à une position séparée de la pluralité de premiers et de seconds modules de batterie dans la première direction.

7. Bloc-batterie selon la revendication 5, dans lequel :
la pluralité de premiers absorbeurs d'ondes réfléchies sont agencés de manière à correspondre à la pluralité de premiers BMS esclaves sous la pluralité de premiers BMS esclaves, et
la pluralité de seconds absorbeurs d'ondes réfléchies sont agencés de manière à correspondre à la pluralité de seconds BMS esclaves sous la pluralité de seconds BMS esclaves.

8. Bloc-batterie selon la revendication 2, dans lequel :
le premier guide de chemin d'ondes est formé entre le couvercle supérieur de bloc-batterie (130) et la pluralité de premiers modules de batterie, et
le second guide de chemin d'ondes est formé entre le couvercle supérieur de bloc-batterie et la pluralité de seconds modules de batterie.

9. Bloc-batterie selon la revendication 1, dans lequel :
une antenne est formée dans les premiers et seconds BMS esclaves.

10. Bloc-batterie selon la revendication 1, dans lequel :
il comprend en outre un couvercle supérieur de bloc-batterie qui couvre la surface supérieure du boîtier de batterie,
dans lequel au moins un trou (130a) est formé dans le couvercle supérieur de bloc-batterie.

11. Bloc-batterie selon la revendication 1, dans lequel :
il comprend une pluralité de premières barres omnibus (910) agencées de manière à enjamber deux modules de batterie adjacents parmi les modules de batterie de la pluralité de premiers modules de batterie ; et
une pluralité de secondes barres omnibus (920) agencées de manière à enjamber deux modules de batterie adjacents parmi les modules de batterie de la pluralité de seconds modules de batterie.

12. Dispositif comprenant le bloc-batterie de la revendication 1.
